# EUROPÄISCHE PATENTANMELDUNG

(11) **EP 3 932 539 A1**
(43) Veröffentlichungstag der Anmeldung: **05.01.2022**
(21) Anmeldenummer: 21183391.8
(22) Anmeldetag: 02.07.2021
(51) Int. Cl.: B01J 20/20, B01J 20/22, B01J 20/32

(54) **EIN IMPRÄGNIERTES SORBENS UND SEIN HERSTELLUNGSVERFAHREN ZUM OXIDIEREN UND SORBIEREN VON QUECKSILBER**

(30) Priorität: 03.07.2020 DE 102020117667
(71) Anmelder: FRAUNHOFER-GESELLSCHAFT zur Förderung der angewandten Forschung e.V., 80686 München (DE)
(72) Erfinder: SCHIEFERSTEIN, Eva, 46047 Oberhausen (DE); MELLER, Karl, 46047 Oberhausen (DE); MÖLDERS, Nils, 46047 Oberhausen (DE); PROKEIN, Michael, 46047 Oberhausen (DE); RENNER, Manfred, 46047 Oberhausen (DE)
(74) Vertreter: Maiwald Patent- und Rechtsanwaltsgesellschaft mbH

(57) **Zusammenfassung**

Sorbens basierend auf einem porösen Trägermaterial und einem Halogenalkan oder Halogenaromaten als Imprägnierungsmittel umfasst.

## Beschreibung

### GEBIET DER TECHNIK

Die Erfindung betreffen ein Sorbens bestehend aus einem porösen Material und einem Imprägnierungsmittel und dem Herstellungsverfahren eines Sorbens unter erhöhtem Druck. Des Weiteren betrifft die Erfindung ein Verfahren zum Sorbieren von Quecksilber aus einem Gemisch mithilfe des in der Erfindung beschriebenen Sorbens.

### HINTERGRUND

Quecksilber ist eines der Umweltgifte dessen Emissionshauptquelle mit ca. 859 t weltweit vor allem in der Energiewirtschaft auftritt [G.Q. Chen, et al., Renewable and Sustainable Energy Reviews, 65, 2016, 345 - 355]. Dabei wird bei hohen Temperaturen von über 700 °C, wie sie in der Energiewirtschaft typischerweise vorliegen können, vor allem das elementare Quecksilber emittiert. Das elementare Quecksilber wird in der Atmosphäre zu den reaktivieren Quecksilber (I) oder (II) Spezies oxidiert. Die gut wasserlöslichen Quecksilber (I) und (II) Spezies können sich in den Ozeanen als giftige organische Quecksilberverbindungen anreichern. Über die Nahrungskette können sich diese Quecksilberverbindungen im menschlichen Organismus anreichern und dort Vergiftungen hervorrufen.

Um diesen Kreislauf zu unterbrechen, werden in Kraftwerken quecksilberhaltige Abgase mit Sorbentien gefiltert. Elementares Quecksilber lässt sich kaum mit porösen Materialen, wie Herdofenkoks oder Aktivkohlen, adsorbieren. Folglich werden poröse Materialien, welche zuvor oder *in situ* imprägniert werden, genutzt, um das elementare Quecksilber zu Quecksilber (I) oder (II) Spezies zu oxidieren und anschließend durch Physisorption und chemische Bindungskräfte an die Sorbentien zu binden. Zur Imprägnierung werden elementarer Schwefel bzw. Schwefelverbindungen oder Halogene bzw. Halogenverbindungen, wie z.B. Brom eingesetzt [B. W. Vosteen et al.; Kraftwerkstechnik 2015: Quecksilberabscheidung in Verbrennungsanlagen mit trockener und halbtrockener Abgasreinigung; ISBN 978-3-934409-70-5, Krishnan SV, Gullett BK, Jozewicz W. Sorption of elemental mercury by activated carbons. Environ. Sci. Technol. 1994; 28,1506 - 12; E. Sasmaz et al.; Mercury chemistry on brominated activated carbon Fuel 2012, 99, 188 - 196; US 3194629 A; US 3662523 A; EP2431087 A2; US 20090117019 A1, EP 1796816 A2].

Die Quecksilberabscheidung direkt im Abgasstrom durch eine *in situ* Herstellung eines Sorbens umfassend ein kohlenstoffhaltiges, poröses Material und weitere Zusatzkomponenten, die unter anderem bromhaltige Verbindungen enthalten, werden in EP2 431 087 A2 und des Weiteren in US 2009/0117019 A1, EP 1 796 816 A2, US 4500327 A, EP 2 422 869 A1, US 8,518,154 B2 und WO 2005/092477 A1 beschrieben.

Ein Hauptproblem der *in situ* Herstellung eines imprägnierten Sorbens ist, dass das Sorbens anfangs unreaktiv ist und erst nach einer Aktivierungszeit das Quecksilber im Abgasstrom abscheiden kann. Dies führt dazu, dass diese Sorbentien, welche nur schwierig recyclebar sind, stark überdosiert werden müssen, um die geregelten Quecksilber-Grenzwerte einhalten zu können. Folglich entstehen unnötigerweise größere Mengen quecksilberhaltiger Abfälle, was ein ökologisches Problem darstellt. Ferner sind die Sorbentien relativ teuer, so dass eine ökonomischere Benutzung der Sorbentien wünschenswert ist.

Im Gegensatz dazu sind ebenso fertig imprägnierte Sorbentien bekannt. Jedoch ist der Anspruch an die Apparatur zur Herstellung solcher imprägnierter Sorbentien hoch. Für die Imprägnierung der Sorbentien in der Gasphase wird mit stark korrosiven und toxischen Halogenen gearbeitet, so dass hohe Anforderungen an die Gerätschaften und an die Sicherheit gestellt werden müssen.

Als Alternative bietet sich die Imprägnierung des Sorbens in der Flüssigphase an. Hierbei werden hohe Mengen an Lösungsmittel mit Halogenverbindungen genutzt, so dass hier die sichere Entsorgung der halogenhaltigen Lösungsmittel problematisch ist. Hinzu kommt, dass die komplette Imprägnierung der spezifischen Oberfläche des Sorbens, vor allem der Mikroporen, nur mit größerem Zeit- und Arbeitsaufwand sichergestellt werden kann, was aber entscheidend für die Qualität der Sorptionsfähigkeit der imprägnierten Sorbentien ist. Die anschließende Trocknung der Sorbentien nach der Imprägnierung in der Flüssigphase sorgt für einen weiteren Arbeitsaufwand, sodass dies ebenso problematisch für die ökonomische Imprägnierung von Sorbentien ist.

### ZUSAMMENFASSUNG DER ERFINDUNG

Es ist daher eine Aufgabe der vorliegenden Erfindung, die mit den aus dem Stand der Technik bekannten imprägnierten Sorbentien einhergehenden Nachteile zu minimieren oder zu beseitigen. Insbesondere ist es eine Aufgabe der Erfindung ein Sorbens bereitzustellen, das eine hohe Sorptionsfähigkeit, insbesondere von Quecksilber, besitzt, und dabei gut handhabbar ist und gut unter ökonomischen als auch ökologischen Kriterien herstellbar ist.

Diese Aufgabe wird mit der hier vorliegenden Erfindung gelöst.

In einem Aspekt betrifft die Erfindung ein Sorbens umfassend
a) 90 - 99 Gew.% poröses Trägermaterial basierend auf dem Gesamtgewicht des Sorbens
   wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
   und
b) 1-10 Gew% Imprägnierungsmittel basierend auf dem Gesamtgewicht des Sorbens
   wobei das Imprägnierungsmittel aus einem Halogenalkan und/ oder Halogenaromaten, besteht,
wobei das Imprägnierungsmittel auf der spezifischen Oberfläche des porösen Trägermaterials verteilt ist.

Die hier vorliegende Erfindung hat den Vorteil, dass das Sorbens mit einem relativ hohen Anteil von bis zu 10 Gew.% Imprägnierungsmittel mit einem relativ ungiftigen Halogenalkan und/ oder Halogenaromaten imprägniert ist und dabei die poröse Struktur des porösen Trägermaterials intakt bleibt, so dass die Sorptionsfähigkeit des Sorbens für das Sorptiv erhöht wird. Das Imprägnierungsmittel im Sorbens hat den Vorteil, dass das Sorptiv oxidiert wird, so dass das oxidierte Sorptiv sogleich in der porösen Struktur des Sorbens absorbiert und/ oder adsorbiert wird. Die Oxidation des Sorptivs hat den Vorteil, dass die Adsorption des Sorptivs in der porösen Struktur erhöht wird. In einer besonderen Ausführung ist das Sorptiv Quecksilber. Unter Quecksilber werden in der hier vorliegenden Erfindung Quecksilber(0), Quecksilber(I) und Quecksilber(II), welche elementar oder als Verbindung vorliegen können, verstanden. Insbesondere kann in der hier vorliegenden Erfindung das Imprägnierungsmittel Quecksilber(0) zu Quecksilber(I) oder Quecksilber(II) oxidieren und das Sorbens das Quecksilber (I) oder (II) adsorbieren, bevorzugt chemisorbieren.

In einem weiteren Aspekt betrifft die Erfindung ein Verfahren zur Herstellung des erfindungsgemäßen Sorbens, wobei das Verfahren die folgenden Schritte umfasst
a) Vorlegen
   50 - 99 Gew.% poröses Trägermaterial basierend auf dem Gesamtgewicht der vorgelegten Mischung,
      wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
      und
   1 - 50 Gew.% Imprägnierungsmittel basierend auf dem Gesamtgewicht der vorgelegten Mischung,
      wobei das Imprägnierungsmittel aus einer organischen Halogenidverbindungen besteht,
   in einem Reaktionsgefäß geeignet für Hochdruckreaktionen,
b) Beschicken des Reaktionsgefäßes mit inertem Gas,
c) Verschließen des Reaktionsgefäßes
   und
   Einstellen einer Reaktionstemperatur von 30 - 150 °C und eines Reaktionsdrucks von 70 - 300 bar in dem geschlossenen Reaktionsgefäß,
d) Absenken des Reaktionsdrucks auf 1 bar, und
e) optional Abdampfen von überschüssigem Imprägnierungsmittel
f) Isolation eines Sorbens umfassend
   f-a) 90 - 99 Gew.% poröses Trägermaterial basierend auf dem Gesamtgewicht des Sorbens
      und
   f-b) 1-10 Gew.% Imprägnierungsmittel basierend auf dem Gesamtgewicht des Sorbens,
   wobei das Imprägnierungsmittel auf der spezifischen Oberfläche des porösen Trägermaterials verteilt ist,
wobei in Schritt c) das Imprägnierungsmittel in die Mikro- und Mesoporen des porösen Trägermaterials eindringt.

Das Beschicken des Reaktionsgefäßes mit inertem Gas, hat den Vorteil, dass bei einer bestimmten Reaktionstemperatur und einem bestimmten Reaktionsdruck, die Imprägnierung des porösen Trägermaterials besonders schnell und schonend für das poröse Trägermaterial verläuft, so dass sich die Porenstruktur des porösen Materials vor und nach der Imprägnierung ähnelt. Die Ähnlichkeit der Porenstruktur vor und nach der Imprägnierung kann mittels Gas-Adsorption nach IUPAC Technical Report (Pure Appl. Chem. 2015; 87(9-10): 1051-1069) nachgewiesen werden. Es ist ein weiterer Vorteil des Verfahrens, dass die gesamte Oberfläche des Sorbens schnell imprägniert wird. Des Weiteren hat das Verfahren den Vorteil, dass das Trocknen des Sorbens besonders schnell erfolgt. Vor allem hat das Verfahren den Vorteil, dass die gesamte Oberfläche des Sorbens schnell imprägniert wird und gleichzeitig das Nutzen von korrosiven und/ oder giftigen Chemikalien minimiert oder sogar vermieden werden kann.

In einem dritten Aspekt betrifft die Erfindung ein Sorbens hergestellt nach dem erfindungsgemäßen Verfahren.

In einem vierten Aspekt betrifft die Erfindung ein Verfahren zum Herausfiltern von Quecksilber aus einem Gemisch unter Verwendung des erfindungsgemäßen Sorbens.

Die Verwendung des hier vorliegenden Sorbens hat den Vorteil, dass verbessert Quecksilber aus einem Gemisch, wie es z. B. in Betriebsabgasanlagen bei der Müllverbrennung vorkommt, herausgefiltert wird, bei gleichzeitig guter und sicherer Handhabbarkeit des Sorbens, z. B. beim Austauschen des Sorbens, und hoher Kosteneffizienz.

### DEFINITONEN

**Sorption** ist eine Sammelbezeichnung für Vorgänge, die zu einer Anreicherung eines Stoffes innerhalb einer Phase oder auf einer Grenzfläche zwischen zwei Phasen führen. Die Anreicherung innerhalb einer Phase nennt man genauer Absorption, die an der Grenzfläche Adsorption.
Der sorbierende Stoff wird **Sorbens** genannt. Der noch nicht sorbierte Stoff wird als **Sorptiv** bezeichnet, während er nach der Sorption Adsorpt bzw. Absorpt genannt wird. **Absorption** beschreibt den Prozess der Aufnahme oder des "Lösens" eines Atoms, Moleküls oder eines Ions in einer anderen Phase. Hierbei handelt es sich nicht um eine Anlagerung an der Oberfläche (Adsorption), sondern um eine Aufnahme in das freie Volumen der absorbierenden Phase. Der Vorgang der Absorption wird durch eine Affinität des einen Stoffes für den anderen hervorgerufen - es besteht eine bestimmte Löslichkeit der Stoffe ineinander. Die Absorption von Gasen kann nicht nur in einer Flüssigkeit, sondern auch in einem festen Stoff erfolgen.

Mit **Adsorption** bezeichnet man die Anreicherung von Stoffen aus Gasen oder Flüssigkeiten an der Oberfläche eines Festkörpers, allgemeiner an der Grenzfläche zwischen zwei Phasen. Die Kräfte, die die Anhaftung verursachen, sind keine chemischen Bindungen, sondern nur Van-der-Waals-Kräfte. Daher wird diese Form der Adsorption exakter physikalische Adsorption oder **Physisorption** genannt. Die Oberfläche, auf der die Adsorption stattfindet, kann die Oberfläche eines Feststoffes oder die Oberfläche einer Flüssigkeit sein. Allgemein nennt man die Oberflächen Grenzflächen. Die Phase, aus der der Stoff auf die Grenzfläche gelangt, kann eine Gasphase oder eine Flüssigkeit (Lösung) sein.

Bei der **Chemisorption** werden Stoffe durch chemische Bindungen auf die Oberfläche eines Feststoffes gebunden. Die Chemisorption kann erhebliche Konsequenzen für den adsorbierten Stoff haben und unterscheidet sich damit von einer Physisorption. Durch Brechen und Knüpfen chemischer Bindungen können sich andere Stoffe bilden und ein desorbierter Stoff (Desorbat) kann ein Produkt einer chemischen Reaktion sein. In der Regel treten bei der Chemisorption hohe Reaktionswärmen auf, was als ein Kriterium zur Unterscheidung zwischen Physisorption und Chemisorption genutzt werden kann. Chemisorption ist oft keine Gleichgewichtsreaktion, also irreversibel, findet unter Umständen nur bei hohen Temperaturen statt.

Die **innere Oberfläche** von porösen oder körnigen Feststoffen umfasst die Gesamtheit aller darin enthaltenen Oberflächen. Die eigentliche Messgröße der inneren Oberfläche ist die **spezifische Oberfläche.** Die Massenbezogene spezifische Oberfläche mit dem Formelzeichen (S*ₘ*) gibt an, welche Oberfläche ein Kilogramm eines Materials besitzt, so dass die Einheit m²/ kg ist. Ferner gibt die volumenbezogene spezifische Oberfläche (Sᵥ) an, welche Oberfläche ein Kubikmeter eines Materials besitzt, so dass die Einheit m²/m³ ist.

Bei der **äußeren Oberfläche** handelt es sich im Gegensatz hierzu um die von außerhalb direkt ersichtliche Oberfläche, also jene, die man bei der Verpackung des Stoffsystems erhalten würde.

Als **Fluid** (von lateinisch fluidus 'fließend') werden Substanzen bezeichnet, die sich unter dem Einfluss von Scherkräften kontinuierlich verformen. In der Physik werden unter dem Begriff Gase und Flüssigkeiten zusammengefasst.

### Überkritisches Fluid

In der Thermodynamik ist der kritische Punkt ein thermodynamischer Zustand eines Stoffes, der sich durch Angleichen der Dichten von flüssiger und gasförmiger Phase kennzeichnet. Die Unterschiede zwischen beiden Aggregatzuständen hören an diesem Punkt auf zu existieren. Der kritische Punkt P_{c} ist durch drei Zustandsgrößen ausgezeichnet: die kritische Temperatur T_{c}, den kritischen Druck p_{c}, die kritische Dichte ρ_{c} bzw. das kritische Molvolumen V_{m,c}. Oberhalb des kritischen Punktes lassen sich Flüssigkeit und Gas nicht mehr voneinander unterscheiden, so dass man von einem überkritischen Fluid, das sich in einem überkritischen Zustand befindet, spricht.

### DETAILIERTE BESCHREIBUNG DER ERFINDUNG

Die vorliegende Erfindung ist gerichtet auf ein
Sorbens umfassend
a) 90 - 99 Gew.%, bevorzugt 91 - 95 Gew.%, noch mehr bevorzugt 91 - 94 Gew.%, vor allem bevorzugt 91,5 - 93,5 Gew.% poröses Trägermaterial basierend auf dem Gesamtgewicht des Sorbens,
   wobei das poröse Trägermaterial aus 90 - 100 Gew.%, bevorzugt aus 95- 100 Gew.%, noch mehr bevorzugt aus 98- 100 Gew.%, vor allem bevorzugt aus 99 - 100 Gew.% Kohlenstoff besteht, und
   eine spezifische Oberfläche gemessen nach BET von 100 - 1500 m²/g, bevorzugt von 100 - 1250 m²/g, noch mehr bevorzugt von 100 - 1000 m²/g, vor allem bevorzugt von 200 - 1000 m²/g, besonders bevorzugt von 300 - 1000 m²/g, insbesondere bevorzugt von 300 - 750 m²/g, am meisten bevorzugt von 300 - 500 m²/g, insbesondere am meisten bevorzugt von 350 - 450 m²/g besitzt,
   und
b) 1-10 Gew.%, bevorzugt 5 - 9 Gew.%, noch mehr bevorzugt 6 - 9 Gew.%, vor allem bevorzugt 6,5 - 8,5 Gew.% Imprägnierungsmittel basierend auf dem Gesamtgewicht des Sorbens,
   wobei das Imprägnierungsmittel aus einem Halogenalkan und/ oder Halogenaromat, bevorzugt Halogenaromat, besteht,
wobei das Imprägnierungsmittel auf der spezifischen Oberfläche des porösen Trägermaterials verteilt ist.

In einer besonderen Ausführung der vorliegenden Erfindung besteht das Sorbens aus
a) 90 - 99 Gew.%, bevorzugt 91 - 95 Gew.%, noch mehr bevorzugt 91 - 94 Gew.%, vor allem bevorzugt 91,5 - 93,5 Gew.% poröses Trägermaterial basierend auf dem Gesamtgewicht des Sorbens,
   wobei das poröse Trägermaterial aus 90 - 100 Gew.%, bevorzugt aus 95 - 100 Gew.%, noch mehr bevorzugt aus 98 - 100 Gew.%, vor allem bevorzugt aus 99 - 100 Gew.% Kohlenstoff besteht und eine spezifische Oberfläche gemessen nach BET (DIN ISO 9277:2010) von 100 - 1500 m²/g, bevorzugt von 100 - 1250 m²/g, noch mehr bevorzugt von 100 - 1000 m²/g, vor allem bevorzugt von 200 - 1000 m²/g, besonders bevorzugt von 300 - 1000 m²/g, insbesondere bevorzugt von 300 - 750 m²/g, am meisten bevorzugt von 300 - 500 m²/g, insbesondere am meisten bevorzugt von 350 - 450 m²/g besitzt,
   und
b) 1-10 Gew.%, bevorzugt 5 - 9 Gew.%, noch mehr bevorzugt 6 - 9 Gew.%, vor allem bevorzugt 6,5 - 8,5 Gew.% Imprägnierungsmittel basierend auf dem Gesamtgewicht des Sorbens,
   wobei das Imprägnierungsmittel aus einem Halogenalkan und/ oder Halogenaromat, bevorzugt Halogenaromat, besteht,
wobei das Imprägnierungsmittel auf der spezifischen Oberfläche des porösen Trägermaterials verteilt ist.

Mit dem Sorbens ist ein sorbierender Stoff, der absorbieren als auch adsorbieren kann, gemeint. Erfindungsgemäß ist ein Adsorbens bevorzugt, welches in der Lage zur Physisorption und Chemisorption ist.
Das erfindungsgemäße poröse Trägermaterial umfasst ein poröses Material mit mikroskopisch kleinen Poren, Kanälen und Löchern, sodass die spezifische Oberfläche des porösen Trägermaterials um ein Vielfaches größer als seine äußere Oberfläche ist und ein Stoffaustausch zwischen dem porösen Material und seiner Umgebung möglich ist. Das erfindungsgemäße poröse Trägermaterial ist in der Lage Flüssigkeiten und Gase zu sorbieren, bevorzugt zu adsorbieren, bevorzugter zu physisorbieren und chemisorbieren.

Dabei besteht das poröse Trägermaterial aus Kohlenstoff, Additiven und/ oder Verunreinigungen, wobei der Anteil an Additiven und/ oder Verunreinigung vor allem von dem Ausgangsstoff zur Herstellung des porösen Trägermaterials abhängt. Bevorzugt besteht das poröse Trägermaterial aus Kohlenstoff, also dem Element Kohlenstoff mit der IUPAC Ordnungszahl 12 im Periodensystem der Elemente.

Mit der spezifischen Oberfläche ist die innere Oberfläche pro Masse oder Volumen gemeint. In der vorliegenden Erfindung wird die spezifische Oberfläche nach BET-(Brunauer-Emmett-Teller)-Messung (DIN ISO 9277:2010) gemessen und in der hier vorliegenden Erfindung mit m²/g angegeben.

Das erfindungsgemäße Imprägnierungsmittel kann sich auf der Oberfläche des porösen Trägermaterials abscheiden. Bevorzugt kann das Imprägnierungsmittel auf der inneren Oberfläche des porösen Trägermaterials adsorbiert werden. Die Adsorption des Imprägnierungsmittels auf der inneren Oberfläche des porösen Trägermaterials kann bevorzugt durch Ausbildung von Van-der-Waals Kräften erreicht werden.

Dabei besteht das Imprägnierungsmittel aus Halogenalkanen oder Halogenaromaten, also eine chemische Verbindung umfassend Kohlenstoff, Wasserstoff, und einem Halogen (Fluor, Chlor, Brom und lod). Mit Aromaten wird ausgedrückt, dass ein aromatisches Molekül mit mindestens einem Ringsystem vorliegt. Die Aromatizität des Aromaten wird anhand der Hückel-Regel bestimmt. Für das Halogenaromat in der hier vorliegenden Erfindung gilt, dass zumindest ein Wasserstoffatom an dem Aromaten durch ein Halogen ersetzt wird.

Unter Halogenalkanen werden Verbindungen mit der Struktur X¹-R¹ verstanden. Dabei ist X¹ ein Halogen, bevorzugt Fluor, Chlor, Brom, lod, insbesondere bevorzugt Brom. R¹ ist ein unverzweigtes oder verzweigtes C₁-C₂₀ Alkyl, bevorzugt C₁-C₁₅ Alkyl, bevorzugter C₁-C₆ Alkyl, oder C₃-C₁₀ Cycloalkyl, bevorzugt C₃-C₆ Cycloalkyl.

Verzweigte und unverzweigte C₁-C₆ Alkyle sind insbesondere:
Methyl, Ethyl, n-Propyl, 1-Methylethyl, n-Bu-tyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethyl-butyl, 1,1,2-Trimethylpropyl, 1,2,2-Trimethylpropyl, 1-Ethyl-1-methylpropyl oder 1-Ethyl-2-methylpropy.

C₃-C₆ Cycloalkyl sind insbesondere: Cyclopropan, Cyclobutan, Cyclopentan, Cyclohexan.

Bevorzugt ist das Imprägnierungsmittel gleichmäßig auf der spezifischen Oberfläche des porösen Trägermaterials verteilt.

Vorzugsweise umfasst das poröse Trägermaterial ein Porensystem enthaltend Mesoporen mit einem Durchmesser von 2 - 50 nm gemessen nach Barrett-Joyner-Halenda (DIN 66134) und Mikroporen mit einem Durchmesser kleiner als 2 nm, bevorzugt mit einem Durchmesser von 1 - 2 nm gemessen nach Horvath-Kawazoe (DIN 66135-4). Die erfindungsgemäßen Mikroporen und Mesoporen können durch Kanäle, Löcher oder größere Poren miteinander verbunden sein. Dementsprechend sind die Mikroporen und Mesoporen offene Poren, welche zum Sorptivaustausch mit der Umgebung in der Lage sind.
Vor allem die erhöhte Anzahl an Mikroporen hat in einer bevorzugten Ausführung der Erfindung den Effekt, dass die Kapazität zur Quecksilbersorption erheblich erhöht wird. Dabei ist es bevorzugt, dass das Imprägnierungsmittel auf der Oberfläche in den Mikroporen verteilt ist.

Vorzugsweise besitzt das poröse Trägermaterial ein Porensystem mit
a) Mesoporen mit einem Volumen von 0,03 - 0,5 cm3/ g, bevorzugt 0,06 - 0,4 cm3/ g, noch mehr bevorzugt 0,1 - 0,3 cm³/ g, vor allem bevorzugt 0,1 - 0,2 cm³/ g und einer Oberfläche von 50 - 300 m²/ g, noch mehr bevorzugt 100 - 250 m²/ g, vor allem bevorzugt 130 - 150 m²/ g nach Barrett-Joyner-Halenda (DIN 66134) und/ oder
b) Mikroporen mit einem Volumen von 0,05 - 0,8 cm³/ g, bevorzugt 0,2 - 0,7 cm3/ g, noch mehr bevorzugt 0,3 - 0,65 cm3/ g, vor allem bevorzugt 0,5 - 0,65 cm³/ g nach Horvath-Kawazoe (DIN66135-4) und einer Oberfläche von 200 - 800 m²/ g, noch mehr bevorzugt 300 - 600 m²/ g , vor allem bevorzugt 400 - 500 m²/ g nach Dubinin-Radushkevich (DIN66135-3).

Vorzugsweise hat das Sorbens
(a) ein Volumenverhältnis der Mikroporen zu Mesoporen zwischen 0,25 und 6,0, bevorzugt zwischen 0,5 und 6,0, noch mehr bevorzugt zwischen 1,0 und 6,0, vor allem bevorzugt zwischen 2,0 und 6,0, vor allem noch mehr bevorzugt zwischen 3,0 und 6,0, insbesondere bevorzugt zwischen 3,5 und 6, insbesondere vor allem bevorzugt zwischen 3,5 und 5,5, am meisten bevorzugt zwischen 3,5 und 5,vor allem am meisten bevorzugt zwischen 3,5 und 4,5, insbesondere am meisten bevorzugt zwischen 3,75 und 4,5, also am meisten sehr bevorzugt zwischen 3,75 und 4,25,
   wobei
   das Volumen der Mikroporen nach Horvath-Kawazoe (DIN66135-4) und
   das Volumen der Mesoporen nach Barrett-Joyner-Halenda (DIN 66134) gemessen wird und/oder
(b) ein Oberflächenverhältnis der Mikroporen zu Mesoporen zwischen 1,0 und 5,0, bevorzugt zwischen 1,5 und 5,0, noch mehr bevorzugt zwischen 2,0 und 5,0, vor allem bevorzugt zwischen 2,5 und 5,0, vor allem noch mehr bevorzugt zwischen 2,5 und 4,5, insbesondere bevorzugt zwischen 2,5 und 4, insbesondere vor allem bevorzugt zwischen 2,5 und 3,5, am meisten bevorzugt zwischen 2,75 und 3,5, vor allem am meisten bevorzugt zwischen 2,75 und 3,25,
   wobei
   die Oberfläche der Mikroporen, nach Dubinin-Radushkevich (DIN66135-3) und
   die Oberfläche der Mesoporen, nach Barrett-Joyner-Halenda (DIN 66134) gemessen wird.
Ein ausgeglichenes Volumenverhältnis und/ oder Oberflächenverhältnis hat den Effekt, dass der Sorptivtransport und die Adsorption eines Sorptivs, wie z. B. Hg(0), Hg(I) und Hg(II), in einem verbesserten Verhältnis liegen.

Vorzugsweise liegt das Imprägnierungsmittel auf der inneren Oberfläche des porösen Trägermittels verteilt vor. Bevorzugter liegt das Imprägnierungsmittel nur auf der inneren Oberfläche des porösen Trägermittels verteilt vor.

Bevorzugt enthalten die Oberflächen der Mikroporen und Mesoporen, bevorzugter die Oberfläche der Mikroporen, des porösen Trägermaterials das Imprägnierungsmittel. Insbesondere bevorzugt kann eine größere Oberfläche der Mikroporen als der Oberfläche der Mesoporen des porösen Trägermaterials mit Imprägnierungsmittel vorliegen. Ob das Imprägnierungsmittel in den Mikroporen oder Mesoporen vorliegt, kann durch verschiedene Messverfahren festgestellt werden. Mittels der Bestimmung der Adsorptionsisotherme von Stickstoff (bei 77 Kelvin) oder Argon (bei 87 Kelvin) kann die Imprägnierung der Mikropore oder Mesopore im porösen Trägermaterial erkannt werden. Der Verlauf der Adsorptionsisotherme des unbehandelten porösen Trägermaterials kann sich von der des imprägnierten porösen Trägermaterials unterscheiden. Falls sich der Verlauf der Adsorptionsisotherme zwischen den behandelten und unbehandelten porösen Trägermaterial nicht erkennbar unterscheiden sollte, ist dem Fachmann bekannt, dass durch eine höhere Beladung des porösen Trägermaterials mit dem Imprägnierungsmittel der Verlauf der Adsorptionsisotherme beeinflusst werden kann. Es ist dem Fachmann bekannt, dass falls das Imprägnierungsmittel vorwiegend in den Mesoporen vorliegt, der Verlauf der Adsorptionsisotherme zu höheren Relativdrücken im Vergleich zum Verlauf der Adsoprtionsisotherme des unbehandelten Trägermaterials führen kann.
Als eine weitere Messmethode zur Bestimmung von Imprägnierungsmittel in den Mikroporen kann sich die Voradsorption von n-Nonan anbieten. Es ist dem Fachmann bekannt, dass n-Nonan in den Mikroporen eines porösen Trägermaterials adsorbiert wird. Damit kann aus den verschiedenen Füllgraden von n-Nonan zwischen einem mit dem Imprägnierungsmittel behandelten porösen Trägermaterial und einem unbehandelten Trägermaterial eine Differenz berechnet werden, um die Menge an Imprägnierungsmittel in den Mikroporen des Trägermaterials zu bestimmen.

Bei dem erfindungsgemäßen Sorbens umfasst das Imprägnierungsmittel die Imprägnierung der Mikroporen. In anderen Worten, die Mikroporen des erfindungsgemäßen Sorbens sind mit dem Imprägnierungsmittel imprägniert. In einer bevorzugten Ausführung der Erfindung hat das den Effekt, dass Hg(0) in den Mikroporen des Sorbens durch das Imprägnierungsmittel zu Hg(I) und/ oder Hg(II) oxidiert wird.

Es ist bekannt, das imprägnierte Sorbentien mit Mikroporen verfügbar sind. Jedoch sind die bisher verfügbaren Sorbentien nicht in den Mikroporen imprägniert. Dies liegt vor allem vor, wenn die Sorbentien in einer Flüssigphase imprägniert werden. Erfindungsgemäß wird das hier vorliegende Sorbens nicht in einer Flüssigphase imprägniert, sondern bevorzugt in einem überkritischen Fluid imprägniert.

Vorzugweise sind alle Bestandteile des Imprägnierungsmittels dazu ausgebildet, das poröse Trägermaterial zu imprägnieren. Somit enthält das Imprägnierungsmittel keine Lösungsmittel oder Additive, die als Nebenprodukte auf dem porösen Trägermaterial verbleiben können. Da das erfindungsgemäße Imprägnierungsmittel nur aus Bestandteilen zum Imprägnieren besteht, hat in einer besonderen Ausführung den Effekt, dass das Abdampfen des Imprägnierungsmittels beschleunigt wird und das Sorbens durch den Verzicht bzw. die Minimierung unnötiger Chemikalien sicherer handzuhaben ist.

Vorzugweise ist erfindungsgemäß das Imprägnierungsmittel ein Halogenaromat.

Vorzugweise weist der Halogenaromat die chemische Strukturformel [FG]ₙ-R-X auf, wobei
"X" ausgewählt ist aus der Gruppe bestehend aus F, Cl, Br und I, bevorzugt ausgewählt aus der Gruppe bestehend aus Cl, Br und I, insbesondere bevorzugt Br,
"R" C₆-C₁₀ Aryl ist,
"FG" ausgewählt ist aus der Gruppe bestehend aus H, NH₂, NR¹₂, COOH, COOR¹, F, Cl, Br, I, OR¹, OH, SH, SR¹, CN und SO₂R¹, bevorzugt ausgewählt aus der Gruppe bestehend aus H, NH₂, NR¹₂, Cl, Br, SH, SR¹,
   wobei R¹ ausgewählt ist aus der Gruppe bestehend aus C₁-C₃ Alkyl, phenyl, tolyl oder xylyl, und
wobei n eine Zahl 1 - 3, bevorzugt 1 - 2, noch mehr bevorzugt 1 ist, besteht.

Unter der hier vorliegenden Erfindung wird unter C₆-C₁₀ Aryl ein aromatischer Rest mit 6 bis 10 Kohlenstoffatomen verstanden. Hierunter fallen insbesondere Phenyl-, Phenyl mit C₁-C₄ Alkyl, wobei das Phenyl 1 - 4 mal mit gleichen oder voneinander unterschiedlichen Alkylsubstituenten substituiert sein kann, solange die insgesamte Anzahl von 10 Kohlenstoffatomen mit dem Phenyl inbegriffen nicht überschritten wird, und Naphthyl-. Bevorzugt ist das C₆-C₁₀ Aryl ein Phenyl.

Unter C₁-C₄ Alkyl wird in der hier vorliegenden Erfindung ein Alkylrest mit 1 bis 4 Kohlenstoffatomen verstanden, worunter insbesondere Methyl-, Ethyl-, n-Propyl-, Isopropyl-, n-Butyl-, iso-Butyl-, sec.-Butyl-, tert.-Butyl- gemeint sind.

Unter der hier vorliegenden Erfindung wird unter C₁-C₃ Alkyl ein Alkylrest mit 1 bis 3 Kohlenstoffatomen verstanden. Hierunter fallen insbesondere die folgenden Alkylreste: Methyl-, Ethyl-, n-Propyl-, Isopropyl-.

In einer besonderen Ausführungsform ist, wenn "n = 1" ist, dann "FG" im Aromaten "R" *meta* zu "X" angeordnet.

Vorzugsweise weist die chemische Strukturformel [FG]ₙ-R-X die Formel 1 auf, 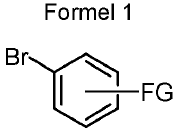 , wobei FG = H oder NH₂ ist.

Insbesondere ist das Halogenaromat meta-Bromanilin oder Brombenzol.

Vorzugweise ist das poröse Trägermaterial eine aktivierte Kohle, wobei die aktivierte Kohle
(a) eine spezifische Oberfläche gemessen nach BET zwischen 350 und 450 m²/g aufweist
   und
(b) ein Volumenverhältnis der Mikroporen zu Mesoporen zwischen 3,5 und 4,5 aufweist, wobei
   das Volumen der Mikroporen nach Horvath-Kawazoe (DIN 66135-4) und
   das Volumen der Mesoporen nach Barrett-Joyner-Halenda (DIN 66134) gemessen wird und
(c) ein Oberflächenverhältnis der Mikroporen zu Mesoporen zwischen 2,5 und 3,5 aufweist, wobei
   die Oberfläche der Mikroporen nach Dubinin-Radushkevich (DIN66135-3) und
   die Oberfläche der Mesoporen nach Barrett-Joyner-Halenda (DIN 66134) gemessen wird.

Vorzugsweise liegt das erfindungsgemäße Imprägnierungsmittel adsorbiert, bevorzugt physisorbiert, auf dem porösen Trägermaterial vor.

In einer bevorzugten Ausführungsform adsorbiert das erfindungsgemäße Sorbens im dazu vorgesehenen Betriebszustand mindestens eine Verbindung ausgewählt aus der Gruppe bestehend aus Quecksilber(0), Quecksilber(I) und Quecksilber(II).

Der vorgesehene Betriebszustand des Sorbens kann der Einsatz in einer Anlage zum Filtern von Quecksilber(0), Quecksilber(I) und/oder Quecksilber(II) sein.
Unter Quecksilber(0), Quecksilber(I) und (II) ist in der hier vorliegenden Erfindung zu verstehen, dass das Quecksilber elementar oder in einer chemischen Verbindung, in einer Ionen oder Molekularbindung mit der formellen Oxidationsstufe +1 und/ oder +2 vorliegt.

In der besonders bevorzugten Ausführungsform oxidiert das Imprägnierungsmittel im dazu vorgesehenen Betriebszustand Quecksilber(0) chemisch zu Quecksilber(I) und/ oder Quecksilber(II). Somit steigt die Oxidationszahl von Quecksilber von 0 auf +1 und/ oder+2. Ebenso kann erfindungsgemäß die Oxidationszahl von Quecksilber von +1 auf +2 steigen. Dementsprechend erfolgt erfindungsgemäß eine Redoxreaktion auf dem porösen Trägermaterial, zwischen der jeweiligen Quecksilberspezies und dem Imprägnierungsmittel. Dabei ist erfindungsgemäß das Imprägnierungsmittel das Oxidationsmittel und die jeweilige Quecksilberspezies das Reduktionsmittel.
Die Oxidation der Quecksilberspezies im Sorbens hat zur Folge, dass die Adsorption des Quecksilbers im Sorbens erhöht wird. Die Adsorption kann durch Chemisorption des Quecksilbers(I) und/ oder (II) im Sorbens erhöht werden.

Vorzugweise liegt das Sorbens als Pulver, Pellet und/ oder Granulat vor. Dabei unterscheiden sich die verschiedenen Formen durch ihre Korngröße. Die jeweilige Form kann einen Einfluss auf die Adsorptionsleistung haben, wobei ein Pulver als feinste Form des Sorbens die beste Adsorptionsleistung bieten kann und das Pellet als gröbste Form des Sorbens die im Vergleich geringste Adsorptionsleistung bieten kann. Dahingegen kann es bevorzugt sein, dass das Sorbens in einer gröberen Form, wie z. B. Granulat oder Pellet vorliegt, damit die Handhabbarkeit verbessert wird.

In einem weiteren Aspekt umfasst die Erfindung ein Verfahren zur Herstellung des erfindungsgemäßen Sorbens, wobei das Verfahren die folgenden Schritte umfasst
a) Vorlegen
   50 - 99 Gew.%, bevorzugt 60 - 99 Gew.%, insbesondere bevorzugt 60 - 70 Gew.%, poröses Trägermaterial basierend auf dem Gesamtgewicht der vorgelegten Mischung,
      wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
      und
   1 - 50 Gew.%, bevorzugt 1 - 40 Gew.%, insbesondere bevorzugt 30 - 40 Gew.%, Imprägnierungsmittel basierend auf dem Gesamtgewicht der vorgelegten Mischung,
      wobei das Imprägnierungsmittel aus einer organischen Halogenidverbindungen besteht,
   in einem Reaktionsgefäß geeignet für Hochdruckreaktionen,
b) Beschicken des Reaktionsgefäßes mit inertem Gas,
c) Verschließen des Reaktionsgefäßes
   und
   Einstellen einer Reaktionstemperatur von 30 - 150 °C, bevorzugt von 30 - 120 °C, besonders bevorzugt von 30 - 100 °C und eines Reaktionsdrucks von 70 - 300 bar, bevorzugt von 70 - 260 bar, besonders bevorzugt von 140 - 260 bar,
      in dem geschlossenen Reaktionsgefäß,
d) Absenken des Reaktionsdrucks auf 1 bar, und
e) optional Abdampfen von überschüssigem Imprägnierungsmittel
f) Isolation eines Sorbens umfassend
   f-a) 90 - 99 Gew.%, bevorzugt 91 - 95 Gew.%, noch mehr bevorzugt 91 - 94 Gew.%, vor allem bevorzugt 91,5 - 93,5 Gew.%, aber in einer besonderen Ausführung der Erfindung auch bevorzugt 95 - 99 Gew.%, poröses Trägermaterial basierend auf dem Gesamtgewicht des Sorbens
      und
   f-b) 1-10 Gew.%, bevorzugt 5 - 9 Gew.%, noch mehr bevorzugt 6-9 Gew.%, vor allem bevorzugt 6,5 - 8,5 Gew.%, aber in einer besonderen Ausführung der Erfindung auch bevorzugt 1 - 5 Gew.%, Imprägnierungsmittel basierend auf dem Gesamtgewicht des Sorbens,
   wobei das Imprägnierungsmittel auf der spezifischen Oberfläche des porösen Trägermaterials verteilt ist,
wobei in Schritt c) das Imprägnierungsmittel in die Mikro- und Mesoporen des porösen Trägermaterials eindringt.

Mit vorgelegter Mischung sind Stoffe gemeint, welche im flüssigen und festen Zustand in das Reaktionsgefäß vorgelegt werden können. Insbesondere ist mit vorgelegter Mischung die Gesamtheit aller Stoffe gemeint, welche in dem Reaktionsgefäß unter Verfahrensschritt a) vorliegen. Insbesondere können die Stoffe unter den gegebenen Verfahrensbedingungen unter c) miteinander reaktionsfähig sein. Insbesondere besteht die vorgelegte Mischung aus porösem Trägermaterial und Imprägnierungsmittel.

Vorzugsweise besteht das Sorbens, welches in dem Verfahren unter Verfahrensschritt f) isoliert wird, aus den gleichen Stoffen wie in der Mischung aus Verfahrensschritt a).

Eine organische Halogenidverbindung ist eine chemische Verbindung, welche Kohlenstoff, Wasserstoff und ein Halogen, bevorzugt Fluor, Chlor, Brom, lod, in einer chemischen Verbindung umfasst, bevorzugt daraus besteht. Dabei besitzt das Halogen die chemische Oxidationsstufe -1.

Vorzugsweise ist die organische Halogenidverbindung ein Halogenalkan oder Halogenaromat. Unter Halogenaromat wird bevorzugt dieselbe chemische Verbindung verstanden, wie weiter oben definiert.
Vorzugweise weist der Halogenaromat die chemische Strukturformel [FG]ₙ-R-X auf wie oben definiert.
Unter Halogenalkan werden Verbindungen mit der Struktur X¹-R¹ verstanden. Dabei ist X¹ ein Halogen, bevorzugt Fluor, Chlor, Brom, lod, insbesondere bevorzugt Brom. R¹ ist ein unverzweigtes oder verzweigtes C₁-C₂₀ Alkyl, bevorzugt C₁-C₁₅ Alkyl, bevorzugter C₁-C₆ Alkyl, oder C₃-C₁₀ Cycloalkyl, bevorzugt C₃-C₆ Cycloalkyl.

Verzweigte und unverzweigte C₁-C₆ Alkyle sind insbesondere:
Methyl, Ethyl, n-Propyl, 1-Methylethyl, n-Bu-tyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethyl-butyl, 1,1,2-Trimethylpropyl, 1,2,2-Trimethylpropyl, 1-Ethyl-1-methylpropyl oder 1-Ethyl-2-methylpropy.

C₃-C₆ Cycloalkyl sind insbesondere: Cyclopropan, Cyclobutan, Cyclopentan, Cyclohexan.

Vorzugsweise ist das organische Halogenid ein Halogenaromat. Besonders bevorzugt ist das organische Halogenid ein Halogenaromat mit der chemischen Strukturformel [FG]ₙ-R-X wie oben beschrieben. Insbesondere ist das organische Halogenid ein Halogenaromat wie in Figur 1 beschrieben.
In Schritt c) kann folglich ein verdichtetes Gas und/ oder eine Flüssigkeit unter dem erhöhten Druck vorliegen.

Vorzugweise wird in dem erfindungsgemäßen Verfahren in Schritt b) als Gas CO₂ genutzt. Hierzu wird CO₂, also Kohlenstoffdioxid in das Reaktionsgefäß eingelassen.

Vorzugsweise wird in Schritt c) des erfindungsgemäßen Verfahrens die Reaktionstemperatur und der Reaktionsdruck im Reaktionsgefäß für 1 - 120 min, bevorzugt für 1 - 105 min, mehr bevorzugt für 1 - 90 min, vor allem bevorzugt für 1 - 75 min, insbesondere bevorzugt für 15 - 75 min, am meisten bevorzugt für 30 - 65 min, vor allem am meisten bevorzugt für 45 - 65 min, insbesondere am meisten bevorzugt für 55 - 65 min gehalten.
In einer besonderen Ausführungsform gibt die Dauer die Zeit an, in welcher ein überkritisches Fluid vorliegt.
Insbesondere wird in einer bevorzugten Ausführung in Schritt c) die Reaktionszeit für 1 - 75 min, bevorzugt für 15 - 75 min, mehr bevorzugt für 45 - 75 min, bevorzugt für 45 - 70 min, bevorzugt für 45 - 65 min, bevorzugt für 55 - 65 min gehalten. Insbesondere ist die Reaktionszeit, die Zeit in welcher ein überkritisches Fluid vorliegt.

Schritt c) des Verfahrens dient in der hier vorliegenden Erfindung zur Imprägnierung des porösen Trägermaterials mit dem Imprägnierungsmittel.

Dabei hat eine längere zeitliche Dauer unter den Bedingungen den Effekt, dass das poröse Trägermaterial verbessert mit dem Imprägnierungsmittel imprägniert wird, wobei eine lange Reaktionszeit zur Folge hat, dass die Effizienz des Verfahrens verringert wird. Folglich ist eine ausbalancierte Reaktionszeit, in der der Reaktionsdruck und die Reaktionstemperatur gehalten werden, bevorzugt.

Vorzugsweise liegt in Schritt c) des erfindungsgemäßen Verfahrens ein überkritisches Fluid des inerten Gases aus Schritt b) vor,
wobei bevorzugt das überkritische Fluid eine Viskosität η bei 40 °C und 70 bar von höchstens 0,10 mPa·s, bevorzugt von 0,01 - 0,1 mPa·s, mehr bevorzugt von 0,01 - 0,1 mPa·s, vor allem bevorzugt von 15 - 80 µPa·s, besitzt. Dabei ist das überkritische Fluid im überkritischen Aggregatzustand. Tabellenwerte zu der Viskosität von überkritischen Gasen, insbesondere CO₂, kann in "Gas Encyclopedia; L'Air Liquide", Elsevier, 1976 nachgeschlagen werden. Folglich ist das überkritische Fluid weder im flüssigen noch im gasförmigen Zustand. Dabei wird erfindungsgemäß das überkritische Fluid durch das Einstellen eines bestimmten Reaktionsdrucks und einer bestimmten Reaktionstemperatur erzeugt. Der Reaktionsdruck und die Reaktionstemperatur zum Einstellen eines überkritischen Fluids sind dabei von mehreren Faktoren abhängig, z. B. von der Beladung des Reaktionsgefäßes, vom Imprägnierungsmittel, etc., so dass es mehrere verschiedene Reaktionsbedingungen geben kann, in denen sich ein überkritisches Fluid ausbildet. Dabei hat das erfindungsgemäße überkritische Fluid den Effekt, dass das überkritische Fluid mit der spezifischen Oberfläche des gesamten porösen Trägermaterials in Kontakt treten kann. Folglich kann das überkritische Fluid in die Mikro- und Mesoporen des porösen Trägermaterials eindringen.

Vorzugweise ist das überkritische Fluid in dem erfindungsgemäßen Verfahren überkritisches CO₂. Somit ist in dem erfindungsgemäßen Verfahren das inerte Gas CO₂ und das überkritische Fluid überkritisches CO₂. Das überkritische CO₂ ist nur unter bestimmten Reaktionstemperaturen in Verbindung mit bestimmten Reaktionsdrücken ein überkritisches Fluid. Unter atmosphärischem Druck von 1 bar bei 20 °C ist CO₂ im gasförmigen Zustand. Folglich erfüllt das CO₂ in der vorliegenden Erfindung den Zweck, dass es unter den Reaktionsbedingungen als überkritisches Fluid vorliegt und in das poröse Trägermaterial eindringt. Sobald jedoch das poröse Trägermaterial unter atmosphärischem Druck von 1 bar bei 20 °C vorliegt, geht das überkritische CO₂ in den Gaszustand über. Erfindungsgemäß ist es möglich, dass das gasförmige CO₂ durch den Druckabfall im Reaktor das Sorbens verlässt. Dadurch kann das poröse Material in kürzester Zeit (zwischen 1 - 5 min) vom Fluid trocknen. Das hat den Effekt, dass für das Herstellungsverfahren eines trockenen Sorbens weniger Verfahrensschritte im Vergleich zu einer konventionellen Flüssigphasenimprägnierung benötigt werden können, da der sonst übliche Trocknungsschritt entfällt. Ferner hat das CO₂ den Vorteil, dass es relativ ungiftig für den Menschen und die Umwelt im Vergleich zu anderen häufig verwendeten Lösungsmitteln in der Flüssigphasenimprägnierung ist. Des Weiteren ist das CO₂ relativ günstig und leicht erhältlich.

Vorzugsweise ist in dem geschlossenen Gefäß bei Schritt c) des Verfahrens das Imprägnierungsmittel in einem überkritischen Fluid gelöst. Somit erfüllt das überkritische Fluid die Aufgabe eines Lösungsmittels. Dies hat den Effekt, dass das Imprägnierungsmittel in die Mikroporen des porösen Trägermaterials gelangen kann. Dabei nimmt das überkritische Fluid selber nicht an der Reaktion teil. In einer besonders bevorzugten Ausführungsform ist das Imprägnierungsmittel in dem überkritischen CO₂ gelöst. Aus der Literatur sind Extraktionsverfahren mit überkritischem CO₂ bekannt, in der Substanzen aus den tiefen Poren von festen Rohstoffen extrahiert wurden (R. Eggers, S.Pilz in H.-J. Bart, S. Pilz (Ed.); "Industrial Scale Natural Products Extraction"; Wiley 2011, S.87 ff.).

Vorzugsweise besteht das überkritische Fluid in dem erfindungsgemäßen Verfahren aus einer Phase oder zwei Phasen, bevorzugt einer Phase. Dabei können in den Phasen verschiedene Konzentrationen an Imprägnierungsmittel im Fluid vorliegen.

Vorzugweise liegt in Schritt c) des erfindungsgemäßen Verfahrens ein Gemisch aus CO₂, porösem Trägermaterial und Imprägnierungsmittel vor. Dabei liegt das CO₂ bevorzugt als überkritisches CO₂ vor und wird als Lösungsmittel verwendet, damit das Imprägnierungsmittel in das poröse Trägermaterial eindringen kann. Erfindungsgemäß sind somit keine weiteren Flüssigkeiten oder Additive nötig, um das poröse Trägermaterial zu imprägnieren.

Vorzugsweise liegt beim Vorlegen des porösen Trägermaterials und des Imprägnierungsmittels in Schritt a) des erfindungsgemäßen Verfahrens ein Gewichtsverhältnis von dem vorgelegten Imprägnierungsmittel zu dem vorgelegten porösen Trägermaterial bei 1,0 - 5,0, bevorzugt bei 1,0 - 3,0, vor allem bevorzugt bei 1,0 - 2,5, am meisten bevorzugt bei 1,0 - 2,0, vor. Das Gewichtsverhältnis wird ausgerechnet, in dem die Masse von eingelegtem Imprägnierungsmittel durch die Masse von eingelegtem porösen Trägermaterial dividiert wird. Das bestimmte vorliegende Gewichtsverhältnis hat den Vorteil, dass genügend Imprägnierungsmittel vorliegt, um das poröse Trägermaterial ausreichend zu imprägnieren. Dass das poröse Trägermaterial mit ausreichend Imprägnierungsmittel imprägniert ist, hat in einer besonderen Ausführung der vorliegenden Erfindung den Effekt, dass die Quecksilberabscheidung sichergestellt wird. Andererseits wird ein Überschuss an Imprägnierungsmittel vermieden, was das anschließende Trocknen nach dem Imprägnieren verlängert. Folglich hat das Gewichtsverhältnis den Effekt, dass das erfindungsgemäße Verfahren durch weniger Verfahrensschritte, weniger chemische Abfälle und geringeren Energieverbrauch ökologischer und ökonomischer ist.

Vorzugweise liegt in Schritt e) des erfindungsgemäßen Verfahrens, wenn das überschüssige Imprägnierungsmittel verdampft ist, dann das trockene Sorbens vor. Folglich ist ein Verfahren zum Trocknen des Sorbens nicht notwendig, was den Vorteil einer Zeitersparnis gegenüber der Flüssigphasenimprägnierung bedeutet, in der das Sorbens in einem extra Schritt getrocknet werden muss.

In einem weiteren Aspekt ist die Erfindung ein Sorbens, das in dem erfindungsgemäßen Verfahren hergestellt wird.
Folglich ist die hier vorliegende Erfindung ein Sorbens, das in einem Verfahren hergestellt wird, wobei das Verfahren die folgenden Schritte umfasst
a) Vorlegen
   50 - 99 Gew.% poröses Trägermaterial basierend auf dem Gesamtgewicht der vorgelegten Mischung,
      wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
      und
   1 - 50 Gew.% Imprägnierungsmittel basierend auf dem Gesamtgewicht der vorgelegten Mischung,
      wobei das Imprägnierungsmittel aus einer organischen Halogenidverbindungen besteht,
   in einem Reaktionsgefäß geeignet für Hochdruckreaktionen,
b) Beschicken des Reaktionsgefäßes mit inertem Gas,
c) Verschließen des Reaktionsgefäßes
   und
   Einstellen einer Reaktionstemperatur von 30 - 150 °C und eines Reaktionsdrucks von 70 - 300 bar
   In dem geschlossenen Reaktionsgefäß,
d) Absenken des Reaktionsdrucks auf 1 bar, und
e) optional Abdampfen von überschüssigem Imprägnierungsmittel
f) Isolation eines Sorbens umfassend
   f-a) 90 - 99 Gew.% poröses Trägermaterial basierend auf dem Gesamtgewicht des Sorbens
      und
   f-b) 1-10 Gew.% Imprägnierungsmittel basierend auf dem Gesamtgewicht des Sorbens,
      wobei das Imprägnierungsmittel auf der spezifischen Oberfläche des porösen Trägermaterials verteilt ist,
wobei in Schritt c) das Imprägnierungsmittel in die Mikro- und Mesoporen des porösen Trägermaterials eindringt.

Insbesondere umfasst das erfindungsgemäße Sorbens
a) 90 - 99 Gew.% poröses Trägermaterial basierend auf dem Gesamtgewicht des Sorbens
   wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
   und
b) 1-10 Gew% Imprägnierungsmittel basierend auf dem Gesamtgewicht des Sorbens
   wobei das Imprägnierungsmittel aus einer organischen Halogenidverbindung, besteht,
wobei das Imprägnierungsmittel auf der spezifischen Oberfläche des porösen Trägermaterials verteilt ist, und
in einem Verfahren hergestellt wird, wobei das Verfahren die folgenden Schritte umfasst
a) Vorlegen
   50 - 99 Gew.% poröses Trägermaterial basierend auf dem Gesamtgewicht der vorgelegten Mischung,
      wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
      und
   1 - 50 Gew.% Imprägnierungsmittel basierend auf dem Gesamtgewicht der vorgelegten Mischung,
      wobei das Imprägnierungsmittel aus einer organischen Halogenidverbindungen besteht,
      in einem Reaktionsgefäß geeignet für Hochdruckreaktionen,
b) Beschicken des Reaktionsgefäßes mit inertem Gas,
c) Verschließen des Reaktionsgefäßes
   und
   Einstellen einer Reaktionstemperatur von 30 - 150 °C und eines Reaktionsdrucks von 70 - 300 bar
   In dem geschlossenen Reaktionsgefäß,
d) Absenken des Reaktionsdrucks auf 1 bar, und
e) optional Abdampfen von überschüssigem Imprägnierungsmittel
f) Isolation eines Sorbens umfassend
   f-a) 90 - 99 Gew.% poröses Trägermaterial basierend auf dem Gesamtgewicht des Sorbens
      und
   f-b) 1 - 10 Gew.% Imprägnierungsmittel basierend auf dem Gesamtgewicht des Sorbens,
      wobei das Imprägnierungsmittel auf der spezifischen Oberfläche des porösen Trägermaterials verteilt ist,
wobei in Schritt c) das Imprägnierungsmittel in die Mikro- und Mesoporen des porösen Trägermaterials eindringt.

Ein weiterer Aspekt der Erfindung ist ein Verfahren zum Herausfiltern von Quecksilber aus einem Gemisch unter Verwendung des erfindungsgemäßen Sorbens. Dabei ist das Gemisch aus dem das Quecksilber herausgefiltert wird, bevorzugt ein Aerosol. Das Quecksilber kann in dem Gemisch im gasförmigen, flüssigen und/ oder festen Aggregatzustand vorliegen. Dabei kann das Quecksilber als Teil von verschiedenen chemischen Verbindungen mit unterschiedlichen Oxidationsstufen oder elementar vorliegen. In dem erfindungsgemäßen Verfahren filtert das erfindungsgemäße Sorbens das Quecksilber aus dem Gemisch, indem das Sorbens das Quecksilber adsorbiert. Dabei kann das Sorbens das Quecksilber sowohl physisorbieren als auch chemisorbieren. Solche Verfahren zum Herausfiltern von Quecksilber mit anderen Sorbentien sind aus dem Stand der Technik bekannt, EP2 431 087 A2, US 2009/0117019 A1, EP 1 796 816 A2, US 4500327 A, EP 2 422 869 A1, US 8,518,154 B2 und WO 2005/092477 A1.

Vorzugweise ist das Verfahren zur Adsorption von Quecksilber in dem erfindungsgemäßen Sorbens.
In dem erfindungsgemäßen Verfahren filtert das erfindungsgemäße Sorbens das Quecksilber aus dem Gemisch, indem das Sorbens das Quecksilber adsorbiert. Dabei physisorbiert als auch chemisorbiert das Sorbens das Quecksilber. Das hat den Effekt, dass die Kapazität zur Sorption von Quecksilber in dem Sorbens erhöht wird.

Vorzugweise wird in dem erfindungsgemäßen Verfahren das Quecksilber in den Mikroporen des erfindungsgemäßen Sorbens adsorbiert. Hierzu muss in dem erfindungsgemäßen Verfahren das Quecksilber in die Mikroporen des erfindungsgemäßen Sorbens eindringen. Dass das Quecksilber als Adsorptiv in den Mikroporen des erfindungsgemäßen Sorbens adsorbiert wird, hat den Effekt, dass die Kapazität des Sorbens zur Sorption von Quecksilber erhöht wird.

Vorzugsweise wird in dem erfindungsgemäßen Verfahren Quecksilber(0) zu Quecksilber(I) oder QuecksiIber(II) oxidiert. Hierzu reagiert das Quecksilber(0) zu Quecksilber(I) oder QuecksiIber(II) mit dem Imprägnierungsmittel in dem erfindungsgemäßen Sorbens in einer Redoxreaktion. Es ist bekannt, dass Quecksilber(I) oder Quecksilber(II) besser in einem porösen Trägermaterial adsorbiert werden können. Insbesondere können Quecksilber(I) oder QuecksiIber(II) im Gegensatz zu Quecksilber(0) chemisorbiert werden. Folglich hat die Oxidation des Quecksilbers(0) zu Quecksilber(I) oder QuecksiIber(II) den Effekt, dass die Sorption von Quecksilber durch das erfindungsgemäße Verfahren erhöht wird.

Vorzugsweise wird das Quecksilber in den Mikroporen des Sorbens oxidiert. Hierfür liegt in den Mikroporen des erfindungsgemäßen Sorbens das Imprägnierungsmittel an dem das Quecksilber oxidiert wird, vor. Folglich geht das Imprägnierungsmittel in den Mikroporen eine Redoxreaktion mit dem Quecksilber ein. Das oxidierte Quecksilber wird in der Mikropore sofort adsorbiert. Dadurch wird erreicht, dass Quecksilber in der Mikropore nicht nur oxidiert, sondern auch das Oxidationsprodukt adsobiert wird, was zu dem Effekt führt, dass pro Gramm Sorbens vermehrt Quecksilber adsorbiert werden kann.

In einer weiteren bevorzugten Ausführungsform ist die Erfindung durch folgende 28 Paragraphen gekennzeichnet:
[1] Sorbens umfassend
   a) 90 - 99 Gew.% poröses Trägermaterial basierend auf dem Gesamtgewicht des Sorbens
      wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
      und
   b) 1-10 Gew% Imprägnierungsmittel basierend auf dem Gesamtgewicht des Sorbens
      wobei das Imprägnierungsmittel aus einem Halogenalkan und/ oder Halogenaromaten besteht,
   wobei das Imprägnierungsmittel auf der spezifischen Oberfläche des porösen Trägermaterials verteilt ist.
[2] Sorbens nach Paragraph 1, wobei das poröse Trägermaterial ein Porensystem enthaltend Mesoporen mit einem Durchmesser von 2 - 50 nm gemessen nach Barrett-Joyner-Halenda (DIN 66134) und Mikroporen mit einem Durchmesser von 1 - 2 nm gemessen nach Horvath-Kawazoe (DIN 66135-4) umfasst.
[3] Sorbens nach Paragraph 1 oder 2, wobei das poröse Trägermaterial ein Porensystem mit
   a) Mesoporen mit einem Volumen von 0,03 - 0,5 cm3/ g und einer Oberfläche von 50 - 300 m²/ g gemessen nach Barrett-Joyner-Halenda (DIN 66134) und/ oder
   b) Mikroporen mit einem Volumen von 0,05 - 0,8 cm³/ g und einer Oberfläche von 200 - 800 m²/ g gemessen nach Dubinin-Radushkevich (DIN66135-3) ist.
[4] Sorbens nach irgendeinem der vorherigen Paragraphen,
   (a) ein Volumenverhältnis der Mikroporen zu Mesoporen zwischen 0,25 und 6,00 vorliegt, wobei
      das Volumen der Mikroporen nach Horvath-Kawazoe (DIN 66135-4) und
      das Volumen der Mesoporen nach Barrett-Joyner-Halenda (DIN 66134) gemessen wird und/oder
   (b) ein Oberflächenverhältnis der Mikroporen zu Mesoporen zwischen 1,0 und 5,0 vorliegt, wobei
      die Oberfläche der Mikroporen, nach Dubinin-Radushkevich (DIN 66135-3) und
      die Oberfläche der Mesoporen, nach Barrett-Joyner-Halenda (DIN 66134) gemessen wird.
[5] Sorbens nach irgendeinem der vorherigen Paragraphen, wobei das Imprägnierungsmittel auf der inneren Oberfläche des porösen Trägermaterials verteilt ist.
[6] Sorbens nach irgendeinem der vorherigen Paragraphen, wobei das Imprägnierungsmittel die Imprägnierung der Mikroporen umfasst.
[7] Sorbens nach irgendeinem der vorherigen Paragraphen, wobei alle Bestandteile des Imprägnierungsmittels dazu ausgebildet sind, das poröse Trägermaterial zu imprägnieren.
[8] Sorbens nach irgendeinem der vorherigen Paragraphen, wobei der Halogenaromat die chemische Strukturformel [FG]ₙ-R-X aufweist,
   wobei
   "X" ausgewählt ist aus der Gruppe bestehend aus F, Cl, Br und I,
   "R" C₆-C₁₀ Aryl ist,
   "FG" ausgewählt ist aus der Gruppe bestehend aus H, NH₂, NR¹₂, COOH, COOR¹, F, Cl, Br, I, OR¹, OH, SH, SR¹, CN und SO₂R¹,
      wobei R¹ ausgewählt ist aus der Gruppe bestehend aus C₁-C₃ alkyl, phenyl, tolyl oder xylyl, und
   wobei n eine Zahl 0 - 3 ist,
   besteht.
[9] Sorbens nach Paragraph 7, wobei die chemische Strukturformel [FG]ₙ-R-X die Formel 1 aufweist, 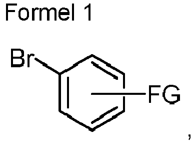 wobei FG = H oder NH₂ ist.
[10] Sorbens nach irgendeinem der vorherigen Paragraphen, wobei das poröse Trägermaterial eine aktivierte Kohle ist, wobei die aktivierte Kohle
   (a) eine spezifische Oberfläche gemessen nach BET zwischen 350 und 450 m²/g aufweist
      und/oder
   (b) ein Volumenverhältnis der Mikroporen zu Mesoporen zwischen 3,5 und 4,5 aufweist, wobei
      das Volumen der Mikroporen nach Horvath-Kawazoe (DIN 66135-4) und
      das Volumen der Mesoporen nach Barrett-Joyner-Halenda (DIN 66134) gemessen wird und/oder
   (c) ein Oberflächenverhältnis der Mikroporen zu Mesoporen zwischen 2,5 und 3,5 aufweist, wobei
      die Oberfläche der Mikroporen nach Dubinin-Radushkevich (DIN 66135-3) und
      die Oberfläche der Mesoporen nach Barrett-Joyner-Halenda (DIN 66134) gemessen wird.
[11] Sorbens nach irgendeinem der vorherigen Paragraphen, wobei das Imprägnierungsmittel adsorbiert auf dem porösen Trägermaterial vorliegt.
[12] Sorbens nach irgendeinem der vorherigen Paragraphen, wobei das Sorbens im dazu vorgesehenen Betriebszustand mindestens eine Verbindung ausgewählt aus der Gruppe bestehend aus Quecksilber(0), Quecksilber(I) und Quecksilber(II) adsorbiert.
[13] Sorbens nach irgendeinem der vorherigen Paragraphen, wobei das Imprägnierungsmittel im dazu vorgesehenen Betriebszustand Quecksilber(0) chemisch zu Quecksilber(I) und/ oder Quecksilber(II) oxidiert.
[14] Sorbens nach irgendeinem der vorherigen Paragraphen, wobei das Sorbens als Pulver, Pellet und/ oder Granulat vorliegt.
[15] Verfahren zur Herstellung eines Sorbens nach irgendeinem der vorherigen Paragraphen 1 bis 13, wobei das Verfahren die folgenden Schritte umfasst
   a) Verfahren zur Herstellung eines Sorbens, wobei das Verfahren die folgenden Schritte umfasst
      a) Vorlegen
         50 - 99 Gew.% poröses Trägermaterial basierend auf dem Gesamtgewicht der vorgelegten Mischung,
            wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
            und
         1 - 50 Gew.% Imprägnierungsmittel basierend auf dem Gesamtgewicht der vorgelegten Mischung,
            wobei das Imprägnierungsmittel aus einer organischen Halogenidverbindungen besteht,
         in einem Reaktionsgefäß geeignet für Hochdruckreaktionen,
      b) Beschicken des Reaktionsgefäßes mit inertem Gas,
      c) Verschließen des Reaktionsgefäßes
         und
         Einstellen einer Reaktionstemperatur von 30 - 150 °C und eines Reaktionsdrucks von 70 - 300 bar
         in dem geschlossenen Reaktionsgefäß,
      d) Absenken des Reaktionsdrucks auf 1 bar, und
      e) optional Abdampfen von überschüssigem Imprägnierungsmittel
      f) Isolation eines Sorbens umfassend
         f-a) 90 - 99 Gew.% poröses Trägermaterial basierend auf dem Gesamtgewicht des Sorbens
            und
         f-b) 1-10 Gew.% Imprägnierungsmittel basierend auf dem Gesamtgewicht des Sorbens,
            wobei das Imprägnierungsmittel auf der spezifischen Oberfläche des porösen Trägermaterials verteilt ist,
   wobei in Schritt c) das Imprägnierungsmittel in die Mikro- und Mesoporen des porösen Trägermaterials eindringt.
[16] Verfahren nach Paragraph 15, wobei in Schritt b) das inerte Gas CO₂ ist.
[17] Verfahren nach Paragraph 15 oder 16, wobei in Schritt c) die Reaktionstemperatur und der Reaktionsdruck im Reaktionsgefäß für 1 - 120 min gehalten werden
[18] Verfahren nach irgendeinem der vorherigen Paragraphen 15 bis 17, wobei in Schritt c) ein überkritisches Fluid des inerten Gases aus Schritt b) vorliegt,
   wobei bevorzugt das überkritische Fluid eine Viskosität η bei 40 °C und 70 bar von höchstens 0,10 mPa·s besitzt.
[18] Verfahren nach Paragraph 17, wobei das überkritische Fluid überkritisches CO₂ ist.
[20] Verfahren nach irgendeinem der vorherigen Paragraphen 15 bis 19, wobei in dem geschlossenen Gefäß bei Schritt c) das Imprägnierungsmittel in einem überkritischen Fluid gelöst ist.
[21] Verfahren nach irgendeinem der vorherigen Paragraphen 15 bis 20, wobei das überkritische Fluid aus einer Phase oder zwei Phasen besteht.
[22] Verfahren nach irgendeinem der vorherigen Paragraphen 15 bis 21, wobei in Schritt c) ein Gemisch aus CO₂, Trägermaterial und Imprägnierungsmittel vorliegt.
[23] Verfahren nach irgendeinem der vorherigen Paragraphen 15 bis 22, wobei wenn in Schritt e) das überschüssige Imprägnierungsmittel verdampft ist, dann das trockene Sorbens vorliegt.
[24] Verfahren nach irgendeinem der vorherigen Ansprüche 15 bis 23, wobei beim Vorlegen des porösen Trägermaterials und des Imprägnierungsmittels in Schritt a) das Gewichtsverhältnis von dem vorgelegten Imprägnierungsmittel zum vorgelegten porösen Trägermaterial bei 1 - 5, bevorzugt bei 1 - 3 liegt.
[25] Sorbens nach irgendeinem der vorherigen Paragraphen 1 bis 14, hergestellt in einem Verfahren nach irgendeinem der vorherigen Paragraphen 15 bis 24.
[26] Verfahren zum Herausfiltern von Quecksilber aus einem Gemisch unter Verwendung eines Sorbens nach irgendeinem der Paragraphen 1 bis 14 oder Paragraph 25.
[27] Verfahren nach Paragraph 26 zur Adsorption von Quecksilber in einem Sorbens nach irgendeinem der vorherigen Paragraphen 1 bis 14 oder Paragraph 25.
[28] Verfahren nach Paragraph 26 oder 27, wobei das Quecksilber in den Mikroporen des Sorbens adsorbiert wird.
[29] Verfahren nach irgendeinem der vorherigen Paragraphen 26 bis 28, wobei Quecksilber(0) zu Quecksilber(I) oder Quecksilber(II) oxidiert wird.
[29] Verfahren nach Paragraph 28, wobei das Quecksilber in den Mikroporen des Sorbens oxidiert wird.

### BEISPIELE

Im Folgenden wird die Erfindung anhand von Ausführungsbeispielen näher erläutert.

Die spezifische Oberfläche der Aktivkohle wurde nach DIN ISO 9277:2010 (BET-Messverfahren) mithilfe eines Analysators (3Flex von Micromeretics) mit Stickstoff bei 77 K berechnet. Weitere Bedingungen wurden gemäß der Norm oder der Herstellerangaben entnommen.

Die Mesoporen wurden nach DIN 66134 (1998) (Barrett-Joyner-Halenda) mithilfe eines Analysators (3Flex von Micromeretics) mit Stickstoff bei 77 K gemessen. Weitere Bedingungen wurden gemäß der Norm oder der Herstellerangaben entnommen.

Die Mikroporen wurden nach DIN 66135 (2004) (Horvath-Kawazoe) bzw. nach DIN 66135-3 (Dubinin-Radushkevich) mithilfe eines Analysators (3Flex von Micromeretics) mit Stickstoff bei 77 K gemessen. Weitere Bedingungen wurden gemäß der Norm oder der Herstellerangaben entnommen.

Die Dichte des überkritischen Kohlendioxids wurde mithilfe der Veröffentlichung "Gas Encyclopedia; L'Air Liquide, Elsevier 1976" bestimmt.

Der Bromgehalt wurde nach DIN-EN ISO 10304-1 über Flüssigkeitschromatographie in Gew.% bestimmt.

### Vorbereitungen

Braunkohle (LEAG) wurde thermisch aktiviert. Dazu wurde die Braunkohle mit 10 L/h Druckluft bei 250 °C für 2 Stunden voroxidiert und anschließend für 2 Stunden bei 800 °C mit einem Kohlendioxid-Fluss von 18 L/h im Drehrohrofen aktiviert. Daraus wurde Aktivkohle gewonnen und mittels Stickstoff-Adsorption (IUPAC Technical Report (Pure Appl. Chem. 2015; 87(9-10): 1051-1069) bei 77 Keine spezifische Oberfläche von 380 m²/g nach BET und ein Porenvolumen von 0,25 cm³/g Gurvich-Volumen bestimmt. Das Volumen der Mikroporen wurde nach Horvath-Kawazoe bei 0,6 cm³/g und die Oberfläche der Mikroporen wurde nach Dubinin-Radushkevich bei 420 m²/g bestimmt. Das Volumen und die Oberfläche der Mesoporen wurde nach Barrett-Joyner Halenda bei 0,15 cm³/g und 140 m²/g bestimmt. Das Volumenverhältnis der Mikroporen zu Mesoporen beträgt 4. Das Oberflächenverhältnis zwischen Mikroporen zu Mesoporen beträgt 3.

### Imprägnierung der Aktivkohle

Für die Beispiele wurde die obige Aktivkohle mit unterschiedlichen halogenhaltigen Verbindungen mittels verdichteten Kohlendioxids, wie folgt beschrieben, imprägniert.

### Beispiel 1

In einem Behälter mit einem Gesamtvolumen von 63 mL wird die hergestellte Aktivkohle (15 g) vorgelegt und Brombenzol (CAS-Nr: 108-86-1, 15 mL, Dichte (bei 20 °C) 1,50 g/mL) wird hinzugetropft. Es lag ein Freiraum von ca. 30 mL in dem geschlossenen Behälter vor. Der Behälter wird mit Kohlendioxid (CAS-Nr.: 124-38-99) bei einem Druck von 150 bar, und einer Reaktionstemperatur von 40 °C beaufschlagt. Somit lag 26 g überkritisches Kohlendioxid in dem geschlossenen Behälter vor, wovon 3 g überkritisches Kohlendioxid im Porenraum der Aktivkohle mit einem Porenvolumen 3,7 mL (bei einem Gurvich-Volumen von 0,25 mL/ g) vorliegt, mit der Annahme, dass das überkritische CO₂ eine Dichte von 0,78 g/mL bei 40 °C und 150 bar in der Pore und im freiem Raum hat.

Es wurde ein Mischfluid von Brombenzol und Kohlendioxid ohne Phasengrenze beobachtet. Das Mischfluid verweilte für 60 min unter diesen Bedingungen. Daraufhin wurde der Druck mit einer Entspannungsrate von 10 bar pro Minute bis zum Erreichen des atmosphärischen Normaldrucks (ca. 1 bar) und die Temperatur auf Umgebungstemperatur (20 °C) abgesenkt. Beispiel 1, die Aktivkohle imprägniert mit Brombenzol, wurde gewonnen.

Eine Messung der Organobrom-Beladung von Beispiel 1 nach Verdampfung des überschüssigen Brombenzols ergab einen Wert von 8,1 Gew.-% basierend auf dem vorgelegten Gewicht der Aktivkohle. Brombenzol wurde in den Mikroporen nachgewiesen.

### Beispiel 2

Die Aktivkohle wird unter gleichbleibenden Bedingungen wie in Beispiel 1 behandelt, wobei für Beispiel 2 die Reaktionstemperatur bei 100 °C, statt 40 °C, liegt.
Somit lag 11 g überkritisches Kohlendioxid in dem geschlossenen Behälter vor, wovon 1,22 g überkritisches Kohlendioxid im Porenraum der Aktivkohle mit einem Porenvolumen 3,7 mL (bei einem Gurvich-Volumen von 0,25 mL/ g) vorliegt, mit der Annahme, dass das überkritische CO₂ eine Dichte von 0,33 g/mL bei 100 °C und 150 bar in der Pore und im freiem Raum hat
Damit wurde die Aktivkohle imprägniert mit Brombenzol, Beispiel 2, gewonnen.

Eine Messung der Organobrom-Beladung von Beispiel 2 nach Verdampfung des überschüssigen Brombenzols ergab einen Wert von 8,4 Gew.-% basierend auf dem vorgelegten Gewicht der Aktivkohle. Brombenzol wurde in den Mikroporen nachgewiesen.

### Beispiel 3

In einem Behälter wird die hergestellte Aktivkohle (15 g) gemeinsam mit 3-Bromanilin (CAS-Nr: 591-19-5, 15 ml) vorgelegt. Der Behälter wird mit Kohlendioxid (CAS-Nr.: 124-38-99) bei einem Druck von 250 bar und einer Reaktionstemperatur von 40 °C beaufschlagt.
Eine CO₂-reiche überkritische Phase, die mit 3-Bromanilin beladen ist, sowie eine flüssige 3-Bromanilin-reiche flüssige Phase, die mit CO₂ beladen ist, wurde durch ein Sichtfenster im Hochdruckreaktor beobachtet. Das mehrphasige Fluid verweilte für 60 min unter diesen Bedingungen. Daraufhin wurde der Druck mit einer Entspannungsrate von 10 bar pro Minute bis zum Erreichen des atmosphärischen Normaldrucks (ca. 1 bar) und die Temperatur auf 20 °C abgesenkt. Beispiel 3, die Aktivkohle imprägniert mit 3-Bromanilin, wurde gewonnen.

Eine Messung der Organobrom-Beladung von Beispiel 3 nach Verdampfung des überschüssigen Bromanilins ergab einen Wert von 6,4 Gew.-% basierend auf dem vorgelegten Gewicht der Aktivkohle. Bromanilin wurde in den Mikroporen nachgewiesen.

### Beispiel 4

Die Aktivkohle wird unter gleichbleibenden Bedingungen wie in Beispiel 3 behandelt, wobei für Beispiel 4 die Reaktionstemperatur bei 100 °C, statt 40 °C, liegt. Damit wurde die Aktivkohle imprägniert mit Bromanilin, Beispiel 4, gewonnen.

Eine Messung der Organobrom-Beladung von Beispiel 4 nach Verdampfung des überschüssigen 3-Bromanilins ergab einen Wert von 6,7 Gew.-% basierend auf dem vorgelegten Gewicht der Aktivkohle. 3-Bromanilin wurde in den Mikroporen nachgewiesen.

## Patentansprüche

1. Sorbens umfassend
a) 90 - 99 Gew.% poröses Trägermaterial basierend auf dem Gesamtgewicht des Sorbens
wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
und
b) 1-10 Gew.% Imprägnierungsmittel basierend auf dem Gesamtgewicht des Sorbens,
wobei das Imprägnierungsmittel aus einem Halogenalkan und/ oder Halogenaromaten, besteht,
wobei das Imprägnierungsmittel auf der spezifischen Oberfläche des porösen Trägermaterials verteilt ist.

2. Sorbens nach Anspruch 1, wobei das poröse Trägermaterial ein Porensystem mit
a) Mesoporen mit einem Volumen von 0,03 - 0,5 cm3/ g und einer Oberfläche von 50 - 300 m²/ g gemessen nach Barrett-Joyner-Halenda (DIN 66134) und/ oder
b) Mikroporen mit einem Volumen von 0,05 - 0,8 cm³/ g und einer Oberfläche von 200 - 800 m²/ g gemessen nach Horvath-Kawazoe (DIN 66135-4) umfasst.

3. Sorbens nach irgendeinem der vorherigen Ansprüche, wobei
(a) ein Volumenverhältnis der Mikroporen zu Mesoporen zwischen 0,25 und 6,00 vorliegt, wobei
das Volumen der Mikroporen nach Horvath-Kawazoe (DIN 66135-4) und
das Volumen der Mesoporen nach Barrett-Joyner-Halenda (DIN 66134) gemessen wird und/oder
(b) ein Oberflächenverhältnis der Mikroporen zu Mesoporen zwischen 1,0 und 5,0 vorliegt, wobei
die Oberfläche der Mikroporen, nach Dubinin-Radushkevich (DIN 66135-3) und
die Oberfläche der Mesoporen, nach Barrett-Joyner-Halenda (DIN 66134) gemessen wird.

4. Sorbens nach irgendeinem der vorherigen Ansprüche, wobei das Halogenaromat die chemische Strukturformel [FG]ₙ-R-X aufweist,
wobei
"X" ausgewählt ist aus der Gruppe bestehend aus F, Cl, Br und I,
"R" C₆-C₁₀ Aryl ist,
"FG" ausgewählt ist aus der Gruppe bestehend aus H, NH₂, NR¹₂, COOH, COOR¹, F, Cl, Br, I, OR¹, OH, SH, SR¹, CN und SO₂R¹,
wobei R¹ ausgewählt ist aus der Gruppe bestehend aus C₁-C₃ alkyl, phenyl, tolyl oder xylyl, und
wobei n eine Zahl 1 - 3 ist,
besteht.

5. Sorbens nach Anspruch 4, wobei die chemische Strukturformel [FG]ₙ-R-X die Formel 1 aufweist, 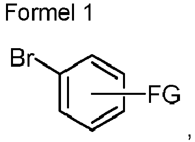 wobei FG = H oder NH₂ ist.

6. Sorbens nach irgendeinem der vorherigen Ansprüche, wobei das poröse Trägermaterial eine aktivierte Kohle ist, wobei die aktivierte Kohle
(a) eine spezifische Oberfläche gemessen nach BET zwischen 350 und 450 m²/g aufweist
und
(b) ein Volumenverhältnis der Mikroporen zu Mesoporen zwischen 3,5 und 4,5 aufweist, wobei
das Volumen der Mikroporen nach Horvath-Kawazoe (DIN 66135-4) und
das Volumen der Mesoporen nach Barrett-Joyner-Halenda (DIN 66134) gemessen wird und
(c) ein Oberflächenverhältnis der Mikroporen zu Mesoporen zwischen 2,5 und 3,5 aufweist, wobei
die Oberfläche der Mikroporen nach Dubinin-Radushkevich (DIN 66135-3) und
das Oberfläche der Mesoporen nach Barrett-Joyner-Halenda (DIN 66134) gemessen wird.

7. Sorbens nach irgendeinem der vorherigen Ansprüche, wobei
das Imprägnierungsmittel auf der inneren Oberfläche des porösen Trägermaterials verteilt ist.

8. Sorbens nach irgendeinem der vorherigen Ansprüche, wobei
das Imprägnierungsmittel die Imprägnierung der Mikroporen umfasst
und/oder
das Imprägnierungsmittel adsorbiert auf dem porösen Trägermaterial vorliegt.

9. Sorbens nach irgendeinem der vorherigen Ansprüche, wobei das Sorbens im dazu vorgesehenen Betriebszustand mindestens eine Verbindung ausgewählt aus der Gruppe bestehend aus Quecksilber(0), Quecksilber(I) und Quecksilber(II) adsorbiert
und/oder
das Imprägnierungsmittel im dazu vorgesehenen Betriebszustand Quecksilber(0) chemisch zu Quecksilber(I) und/ oder Quecksilber(II) oxidiert.

10. Verfahren zur Herstellung eines Sorbens, wobei das Verfahren die folgenden Schritte umfasst
a) Vorlegen
50 - 99 Gew.% poröses Trägermaterial basierend auf dem Gesamtgewicht der vorgelegten Mischung,
wobei das poröse Trägermaterial aus 90 - 100 Gew.% Kohlenstoff besteht und eine spezifische Oberfläche gemessen nach BET (DIN ISO 9277:2010) von 100 - 1500 m²/g besitzt,
und
1 - 50 Gew.% Imprägnierungsmittel basierend auf dem Gesamtgewicht der vorgelegten Mischung,
wobei das Imprägnierungsmittel aus einer organischen Halogenidverbindungen besteht,
in einem Reaktionsgefäß geeignet für Hochdruckreaktionen,
b) Beschicken des Reaktionsgefäßes mit inertem Gas,
c) Verschließen des Reaktionsgefäßes
und
Einstellen einer Reaktionstemperatur von 30 - 150 °C und eines Reaktionsdrucks von 70 - 300 bar
In dem geschlossenen Reaktionsgefäß,
d) Absenken des Reaktionsdrucks auf 1 bar, und
e) optional Abdampfen von überschüssigem Imprägnierungsmittel
f) Isolation eines Sorbens umfassend
f-a) 90 - 99 Gew.% poröses Trägermaterial basierend auf dem Gesamtgewicht des Sorbens
und
f-b) 1 - 10 Gew.% Imprägnierungsmittel basierend auf dem Gesamtgewicht des Sorbens,
wobei das Imprägnierungsmittel auf der spezifischen Oberfläche des porösen Trägermaterials verteilt ist,
wobei in Schritt c) das Imprägnierungsmittel in die Mikro- und Mesoporen des porösen Trägermaterials eindringt.

11. Verfahren nach Anspruch 10, wobei in Schritt c) die Reaktionstemperatur und der Reaktionsdruck im Reaktionsgefäß für 1 - 120 min gehalten wird
und/oder
in Schritt c) ein überkritisches Fluid des inerten Gases aus Schritt b) vorliegt,
wobei bevorzugt das überkritische Fluid eine Viskosität η bei 40 °C und 70 bar von höchstens 0,10 mPa·s besitzt
und/oder
das inerte Gas CO₂ ist und das überkritische Fluid überkritisches CO₂ ist.

12. Verfahren nach irgendeinem der vorherigen Ansprüche 10 bis 11, wobei in dem geschlossenen Gefäß bei Schritt c) das Imprägnierungsmittel in einem überkritischen Fluid gelöst ist
und/oder
beim Vorlegen des porösen Trägermaterials und des Imprägnierungsmittels in Schritt a) ein Gewichtsverhältnis von dem vorgelegten Imprägnierungsmittel zu dem vorgelegten porösen Trägermaterial bei 1.0 - 5.0, bevorzugt bei 1.0 - 3.0, vorliegt.

13. Sorbens nach irgendeinem der vorherigen Ansprüche 1 bis 9, hergestellt in einem Verfahren nach irgendeinem der vorherigen Ansprüche 10 bis 12.

14. Verfahren zum Herausfiltern von Quecksilber aus einem Gemisch unter Verwendung eines Sorbens nach irgendeinem der Ansprüche 1 bis 9 oder Anspruch 13.

15. Verfahren nach Anspruch 14, wobei das Quecksilber in einem Sorbens nach irgendeinem der vorherigen Ansprüche 1 bis 9 oder Anspruch 13 adsorbiert wird
und/oder
das Quecksilber in den Mikroporen des Sorbens adsorbiert wird und/oder
Quecksilber(0) zu Quecksilber(I) oder Quecksilber(II) in den Mikroporen des Sorbens oxidiert wird.
